# EUROPEAN PATENT APPLICATION

(11) **EP 4 648 122 A1**
(43) Date of publication of application: **12.11.2025**
(21) Application number: 25175458.6
(22) Date of filing: 09.05.2025
(51) Int. Cl.: H01M 4/131, H01M 4/136, H01M 4/36, H01M 4/525, H01M 4/58, H01M 4/62, H01M 4/66, H01M 10/0525, H01M 4/02

(54) **POSITIVE ELECTRODES AND RECHARGEABLE LITHIUM BATTERIES**

(30) Priority: 10.05.2024 KR 20240062165
(71) Applicant: SAMSUNG SDI CO., LTD., Yongin-si, Gyeonggi-do 17084 (KR)
(72) Inventor: KIM, Kyung, 17084 Yongin-si (KR); LEE, Sangheon, 17084 Yongin-si (KR); KO, Youngdae, 17084 Yongin-si (KR); KIM, Seohyun, 17084 Yongin-si (KR); KIM, Won-Seok, 17084 Yongin-si (KR); KIM, Cheonsoo, 17084 Yongin-si (KR); AHN, Sanghyuck, 17084 Yongin-si (KR); LEE, Bo-Ra, 17084 Yongin-si (KR); WON, Jeonga, 17084 Yongin-si (KR); JIN, Sukyung, 17084 Yongin-si (KR)
(74) Representative: Marks & Clerk LLP

(57) **Abstract**

A positive electrode and a rechargeable lithium battery including the positive electrode are disclosed. The positive electrode includes a positive electrode current collector, a first positive electrode active material layer provided on the positive electrode current collector and including a first positive electrode active material, and a second positive electrode active material layer provided on the first positive electrode active material layer and including a second positive electrode active material, wherein the first positive electrode active material includes a lithium iron phosphate-based compound, the second positive electrode active material includes a lithium cobalt-based oxide, and a weight ratio of the second positive electrode active material to the first positive electrode active material is about 40 to about 55.

## Description

### BACKGROUND

### 1. Field

One or more embodiments of the present disclosure relate to a positive electrode and a rechargeable lithium battery.

### 2. Description of the Related Art

A portable information device (such as a cell phone, a laptop, a smart phone, and/or the like), and/or an electric vehicle uses rechargeable lithium batteries with relatively high energy density and easy portability as driving power sources. Recently, research has been conducted on using rechargeable lithium batteries with high energy density as driving power sources in hybrid and/or electric vehicles and/or as an energy storage power source in energy storage systems and/or power walls.

Various positive electrode active materials have been investigated to develop (realize or provide) rechargeable lithium batteries for these applications. Among them, lithium nickel-based oxide, lithium nickel manganese cobalt composite oxide, lithium nickel cobalt aluminium composite oxide, and lithium cobalt-based oxide are mainly or predominantly used as positive electrode active materials. As the demand for large, high-capacity, and/or high-energy-density rechargeable lithium batteries increases it is desirable to develop new and/or improved positive electrode active materials.

### SUMMARY

One or more aspects of embodiments of the present disclosure are directed toward a positive electrode having excellent or suitable safety and/or improved or enhanced capacity (e.g., electrical capacity) characteristics and a rechargeable lithium battery including the positive electrode.

Additional aspects will be set forth in part in the description which follows and, in part, will be apparent from the description, or may be learned by practice of the presented embodiments of the disclosure.

In some example embodiments, a positive electrode includes: a positive electrode current collector; a first positive electrode active material layer provided on the positive electrode current collector and including a first positive electrode active material; and a second positive electrode active material layer provided on the first positive electrode active material layer and including a second positive electrode active material; wherein the first positive electrode active material includes a lithium iron phosphate-based compound, the second positive electrode active material includes a lithium cobalt-based oxide, and a weight ratio of the second positive electrode active material to the first positive electrode active material is about 40 to about 55.

In some example embodiments, a rechargeable lithium battery includes: the positive electrode as described in one or more embodiments; a negative electrode; and an electrolyte.

At least some of the above and other features of the invention are set out in the claims.

According to one or more embodiments, the positive electrode may secure or provide excellent or suitable safety while improving or enhancing capacity (e.g., electrical capacity) characteristics. A rechargeable lithium battery including the positive electrode as described in one or more embodiments may exhibit high initial capacity characteristics and long cycle-life characteristics even under high voltage driving conditions while improving or enhancing safety.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1-4 each is a schematic view illustrating rechargeable lithium batteries according to one or more embodiments.
FIG. 5 is a cross-sectional view schematically illustrating a positive electrode according to one or more embodiments.

### DETAILED DESCRIPTION

Hereinafter, embodiments of the present disclosure will be described in more detail so that those of ordinary skill in the art can easily implement them. However, the subject matter of the present disclosure may be embodied in one or more suitable forms and should not be construed as being limited to the embodiments set forth herein.

The terminology used herein is used to describe particular embodiments only and is not intended to be limiting of the present disclosure. The singular expression includes the plural expression unless the context clearly dictates otherwise.

As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree, and are intended to account for the inherent deviations in measured or calculated values that would be recognized by those of ordinary skill in the art. "About" or "approximately," as used herein, are also inclusive of the stated value and refer to within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ±30%, ±20%, ±10%, or ±5% of the stated value.

Any numerical range recited herein is intended to include all sub-ranges of substantially the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

As used herein, "combination thereof" refers to a mixture, a laminate, a composite, a copolymer, an alloy, a blend, a reaction product, and/or the like of the constituents.

Herein, it should be understood that the terms, such as "comprises," "includes," or "have," are intended to designate the presence of an embodied feature, number, step (e.g., act or task), element, and/or a (e.g., any suitable) combination thereof, but it does not preclude the possibility of the presence or addition of one or more other features, number, step (e.g., act or task), element, and/or a (e.g., any suitable) combination thereof.

In the drawings, the thickness of layers, films, panels, regions, and/or the like, are exaggerated for clarity and like reference numerals designate like elements throughout the specification. It will be understood that if (e.g., when) an element, such as a layer, a film, a region, or a substrate, is referred to as being "on" another element, it may be directly on the other element or intervening elements may also be present. In contrast, if (e.g., when) an element is referred to as being "directly on" another element, there are no intervening elements present.

In one or more embodiments, "layer" herein includes not only a shape formed or provided on the whole surface if (e.g., when) viewed from a plan view, but also a shape formed or provided on a partial surface.

The average particle diameter may be measured by a method generally used by or generally available to those skilled in the art, for example, by a particle size analyzer and/or by a transmission electron microscope (TEM) image and/or a scanning electron microscope (SEM) image. In one or more embodiments, an average particle diameter value may be measured and obtained by using a dynamic light scattering (DLS) method, performing data analysis, counting the number of particles for each particle size range, and calculating from this information. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope image. D₅₀ may refer to the average diameter (or size) of particles whose cumulative volume corresponds to 50 vol% in the particle size distribution (e.g., cumulative distribution), and refer to the value of the particle size corresponding to 50% from the smallest particle when the total number of particles is 100% in the distribution curve accumulated in the order of the smallest particle size to the largest particle size. In the present disclosure, if (e.g., when) particles are spherical, "diameter" indicates an average particle diameter, and if (e.g., when) the particles are non-spherical, the "diameter" indicates a major axis length.

Herein, "or" is not to be construed as an exclusive meaning, for example, "A or B" is construed to include A, B, or A+B.

"Metal" is interpreted as a concept including ordinary metals, transition metals, and metalloids (semi-metals).

### Positive Electrode

In one or more embodiments, a positive electrode includes a positive electrode current collector; a first positive electrode active material layer provided on the positive electrode current collector and including a first positive electrode active material; and a second positive electrode active material layer provided on the first positive electrode active material layer and including a second positive electrode active material; wherein the first positive electrode active material includes a lithium iron phosphate-based compound, the second positive electrode active material includes a lithium cobalt-based oxide, and a weight ratio of the second positive electrode active material to the first positive electrode active material is about 40 to about 55.

In order to meet the demands for high capacity (e.g., electrical capacity), high energy density, and cost reduction in rechargeable lithium batteries, positive electrode active materials having olivine crystal structures, such as lithium iron phosphate (LFP) and lithium manganese iron phosphate (LMFP), have been and are being studied or pursued. However, the positive electrode active material having this olivine crystal structure has a low lithium availability, which limits its ability to achieve high capacity (e.g., electrical capacity).

At the same time, in one or more embodiments, for lithium cobalt-based positive electrode active materials having a layered crystal structure, the lithium capacity within the structure is high, and thus the capacity (e.g., electrical capacity) and efficiency (e.g., electrical efficiency) characteristics are excellent or suitable, making them suitable as materials for high-capacity batteries, but there is a problem that safety is relatively low in cell bending tests and/or the like.

Accordingly, one or more embodiments of the present disclosure provide a method of securing or providing the safety of a rechargeable lithium battery and concurrently (e.g., simultaneously) implementing high-capacity characteristics by providing a two-layer composite positive electrode active material layer using a lithium iron phosphate-based compound and a lithium cobalt-based oxide.

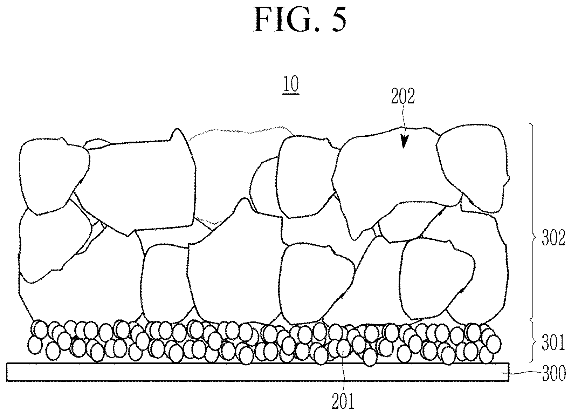

If (e.g., when) a positive electrode active material layer is formed or provided by using a lithium iron phosphate-based compound alone, it is not easy to implement a battery having a high capacity (e.g., electrical capacity) even if the safety of the rechargeable lithium battery is secured or provided. Accordingly, the structure of a positive electrode capable of implementing a positive electrode having high-capacity (e.g., electrical capacity) characteristics while ensuring the safety of the rechargeable lithium battery is schematically illustrated in a cross-sectional diagram in FIG. 5. A positive electrode 10 according to one or more embodiments includes a positive electrode current collector 300; a first positive electrode active material layer 301 provided on the positive electrode current collector and including a first positive electrode active material 201; and a second positive electrode active material layer 302 provided on the first positive electrode active material layer and including a second positive electrode active material 202. In one or more embodiments, the first positive electrode active material 201 includes a lithium iron phosphate-based compound, and the second positive electrode active material 202 includes a lithium cobalt-based oxide. In this way, by providing the positive electrode active material layer as a two-layer so that a first positive electrode active material layer 301 including a lithium iron phosphate-based compound and a second positive electrode active material layer 302 including a lithium cobalt-based oxide are formed or provided on the positive electrode current collector 300, excellent or suitable safety and high-capacity (e.g., electrical capacity) characteristics may be secured or provided concurrently (e.g., simultaneously).

In other words, one or more embodiments of the present disclosure provide a method to secure the safety of a rechargeable lithium battery while concurrently (e.g., simultaneously) implementing high-capacity characteristics. This may be achieved by providing a two-layer composite positive electrode active material layer using a lithium iron phosphate-based compound and a lithium cobalt-based oxide.

If (e.g., when) forming or providing a positive electrode active material layer using only a lithium iron phosphate-based compound, it is challenging to achieve a high-capacity battery, even if the safety of the rechargeable lithium battery is ensured. Accordingly, the structure of a positive electrode capable of achieving high-capacity characteristics while ensuring safety is illustrated in FIG. 5.

A positive electrode, according to some embodiments, includes a positive electrode current collector, a first positive electrode active material layer on the current collector containing a lithium iron phosphate-based compound, and a second positive electrode active material layer on the first layer containing a lithium cobalt-based oxide. By forming or providing the positive electrode active material layer as a two-layer structure, both excellent or suitable safety and high-capacity characteristics may be concurrently (e.g., simultaneously) secured or provided.

In the positive electrode according to one or more embodiments, a weight ratio of the second positive electrode active material 202 to the first positive electrode active material 201 is greater than or equal to about 40, for example, greater than or equal to about 45, greater than or equal to about 46, greater than or equal to about 48, or greater than or equal to about 50. In one or more embodiments, the weight ratio of the second positive electrode active material 202 to the first positive electrode active material 201 is less than or equal to about 55, for example, less than or equal to about 54.5, less than or equal to about 54, or less than or equal to about 53.7. Among the entire positive electrode active material layers (e.g., the first positive electrode active material layer and the second positive electrode active material layer), the safety of the rechargeable lithium battery may be secured or provided by including a lithium iron phosphate-based compound in the first positive electrode active material 201. At the same time, high capacity (e.g., electrical capacity) characteristics that are difficult to secure or provide, if (e.g., when) a lithium iron phosphate-based compound as a positive electrode active material is used, may be secured or provided by combining a lithium cobalt-based oxide in the second positive electrode active material 202. In one or more embodiments, by precisely or suitably controlling the content (e.g., amount) ratio of the second positive electrode active material relative to the first positive electrode active material, excellent or suitable capacity (e.g., electrical capacity) characteristics while ensuring the desired or suitable level of cell bending safety may be secured or provided.

The lithium iron phosphate-based compound according to one or more embodiments is a compound including lithium, phosphate, and iron and may be represented by, for example, Chemical Formula 1.

Chemical Formula 1 Liₐ₁Fex₁M¹_{y1}M²_{z1}(PO_{4-b1})X_{b1}

In Chemical Formula 1, 0.9≤a1≤1.8, 0.1≤x1≤1, 0≤y1≤0.7, 0≤z1≤0.7, 0.9≤x1+y1+z1≤1.1, and 0≤b1≤0.1, M¹ and M² may each independently be one or more elements selected from among aluminium (Al), boron (B), barium (Ba), calcium (Ca), cerium (Ce), cobalt (Co), chromium (Cr), magnesium (Mg), manganese (Mn), molybdenum (Mo), niobium (Nb), silicon (Si), strontium (Sr), titanium (Ti), vanadium (V), tungsten (W), and zirconium (Zr), and X is one or more elements selected from among fluorine (F), phosphorus (P), and sulfur (S).

For example, in Chemical Formula 1, the value of x1 may be selected from the following ranges of 0.1≤x1<1, 0.1≤x1≤0.9, 0.3≤x1 ≤ 1, 0.3≤x1<1, or 0.3≤x1≤ 0.9.

The lithium cobalt-based oxide according to one or more embodiments is an oxide including lithium and cobalt, and may be represented by, for example, Chemical Formula 2.

Chemical Formula 2 Liₐ₂Coₓ₂M³_{y2}M⁴_{z2}O_{2-b2}X_{b2}

In Chemical Formula 2, 0.9≤a2≤1.8, 0.3≤x2≤1, 0≤y2≤0.7, 0≤z2≤0.7, 0.9≤x2+y2+z2≤1.1, and 0≤b2≤0.1, M³ and M⁴ may each independently be one or more elements selected from among Al, B, Ba, Ca, Ce, Cr, iron (Fe), Mg, Mn, Mo, Nb, Si, Sr, Ti, V, W, and Zr, and X is one or more elements selected from among F, P, and S.

For example, the lithium cobalt-based oxide may have a cobalt content (e.g., amount) of greater than or equal to about 60 mol%, for example, for example greater than or equal to about 65 mol%, greater than or equal to about 70 mol%, greater than or equal to about 75 mol%, or greater than or equal to about 80 mol% based on 100 mol% of a total metal excluding lithium. In one or more embodiments, the lithium cobalt-based oxide may have a cobalt content (e.g., amount) of less than or equal to about 100 mol%, for example, less than or equal to about 99 mol%, less than or equal to about 98 mol%, or less than or equal to about 95 mol% based on 100 mol% of a total metal excluding lithium. If (e.g., when) a cobalt content (e.g., amount) of the lithium cobalt-based oxide is within the above ranges, excellent or suitable structural safety may be secured or provided, and it may also be more advantageous or beneficial for securing battery (e.g., rechargeable lithium battery) capacity.

For example, LiFePO₄, LiFeₓMn₍₁₋ₓ₎PO₄(0.1≤x≤0.9), and/or a (e.g., any suitable) combination thereof may be used as the lithium iron phosphate-based compound, and LiCoO₂ may be used as the lithium cobalt-based oxide.

In one or more embodiments, the average particle diameter of the first positive electrode active material may be different from the average particle diameter of the second positive electrode active material, for example, as illustrated in FIG. 5, the average particle diameter of the first positive electrode active material 201 may be smaller than the average particle diameter of the second positive electrode active material 202. If this condition is satisfied, the effect of securing excellent or suitable bending safety and capacity (e.g., electrical capacity) of the rechargeable lithium battery by using the first positive electrode active material and the second positive electrode active material may be further improved or enhanced.

For example, the average particle diameter (D₅₀) of the first positive electrode active material 201 may be greater than or equal to about 0.1 µm, for example, greater than or equal to about 0.3 µm, greater than or equal to about 0.5 µm, or greater than or equal to about 1 µm. In one or more embodiments, the average particle diameter (D₅₀) of the first positive electrode active material 201 may be less than or equal to about 5 µm, for example, less than or equal to about 4.5 µm, less than or equal to about 4 µm, less than or equal to about 3 µm, less than or equal to about 2 µm, or less than or equal to about 1.3 µm. In the foregoing ranges, it may be advantageous or beneficial for securing or providing excellent or suitable surface area to reduce energy loss and secure or provide excellent or suitable bending safety and capacity (e.g., electrical capacity).

For example, the average particle diameter (D₅₀) of the second positive electrode active material 202 may be greater than or equal to about 8 µm, for example, greater than or equal to about 10 µm, greater than or equal to about 12 µm, greater than or equal to about 15 µm, or greater than or equal to about 17 µm. In one or more embodiments, the average particle diameter (D₅₀) of the second positive electrode active material 202 may be less than or equal to about 30 µm, for example, less than or equal to about 28 µm, less than or equal to about 27 µm, less than or equal to about 26 µm, or less than or equal to about 25 µm. In the foregoing ranges, the high capacity (e.g., electrical capacity) characteristics of the rechargeable lithium battery may be efficiently or suitably secured or provided.

For example, the average particle diameter of the second positive electrode active material may be about 4 times or more, for example, about 5 times or more, about 8 times or more, about 10 times or more, about 15 times or more, about 20 times or more, or about 23 times or more the average particle diameter of the first positive electrode active material. In one or more embodiments, the average particle diameter of the second positive electrode active material may be about 50 times or less, for example, about 45 times or less, about 40 times or less, about 35 times or less, or about 30 times or less the average particle diameter of the first positive electrode active material. In the foregoing ranges, the effect of securing or providing excellent or suitable bending stability and high-capacity (e.g., electrical capacity) characteristics may be maximized or enhanced.

In one or more embodiments, the average particle diameter for the first positive electrode active material 201 and/or the second positive electrode active material 202 may be obtained by randomly measuring the size (e.g., diameter or major axis length) of about 20 particles using scanning electron microscope images of each positive electrode active material to obtain a particle size distribution, and taking the diameter (D₅₀) of particles having a cumulative volume of 50 volume% from the particle size distribution as the average particle diameter.

In one or more embodiments, the first positive electrode active material may be included in an amount of greater than or equal to about 85 wt%, for example, greater than or equal to about 85.5 wt%, or greater than or equal to about 86 wt% based on 100 wt% of the first positive electrode active material layer. In one or more embodiments, the first positive electrode active material may be included in an amount of less than or equal to about 90 wt%, for example, less than or equal to about 89 wt%, less than or equal to about 88.5 wt%, less than or equal to about 88 wt%, or less than or equal to about 87 wt% based on 100 wt% of the first positive electrode active material layer. In the foregoing ranges, it may be more advantageous or beneficial to secure or provide bending safety.

For example, the second positive electrode active material may be included in an amount of greater than or equal to about 91 wt%, for example, greater than or equal to about 93 wt%, or greater than or equal to about 95 wt% based on 100 wt% of the second positive electrode active material layer. In one or more embodiments, the second positive electrode active material may be included in an amount of less than or equal to about 99.9 wt%, for example, less than or equal to about 99.5 wt%, less than or equal to about 99 wt%, or less than or equal to about 98.7 wt% based on 100 wt% of the second positive electrode active material layer. In the foregoing ranges, the high capacity (e.g., electrical capacity) characteristics of the rechargeable lithium battery may be effectively or suitably secured or provided.

For example, a total content (e.g., amount) of the first positive electrode active material and the second positive electrode active material may be greater than or equal to about 95 wt% based on 100 wt% of the total positive electrode active material layer. In one or more embodiments, the total content (e.g., amount) of the first positive electrode active material and the second positive electrode active material may be less than or equal to about 98.5 wt% based on 100 wt% of the total positive electrode active material layer. In the foregoing ranges, the high capacity (e.g., electrical capacity) characteristics of the rechargeable lithium battery may be effectively or suitably secured or provided.

In one or more embodiments, a total loading level of the first positive electrode active material layer and the second positive electrode active material layer may be greater than or equal to about 30 mg/cm², for example, greater than or equal to about 32 mg/cm², greater than or equal to about 34 mg/cm², greater than or equal to about 34.85 mg/cm², or greater than or equal to about 35.10 mg/cm². In one or more embodiments, the total loading level of the first positive electrode active material layer and the second positive electrode active material layer may be less than or equal to about 40 mg/cm², for example, less than or equal to about 39 mg/cm², less than or equal to about 38 mg/cm², or less than or equal to about 37 mg/cm². Herein, the loading level may be the amount of electrode active material coated on the current collector per unit area.

For example, the loading level of the first positive electrode active material layer may be greater than or equal to about 0.1 mg/cm², for example, greater than or equal to about 0.2 mg/cm², greater than or equal to about 0.5 mg/cm², or greater than or equal to about 0.7 mg/cm². In one or more embodiments, the loading level of the first positive electrode active material layer may be less than or equal to about 4 mg/cm², for example, less than or equal to about 3.5 mg/cm², less than or equal to about 3.2 mg/cm², less than or equal to about 3 mg/cm², less than or equal to about 2 mg/cm², less than or equal to about 0.97 mg/cm², less than or equal to about 0.90 mg/cm², or less than or equal to about 0.75 mg/cm². In one or more embodiments, the loading level of the second positive electrode active material layer may be greater than or equal to about 29.9 mg/cm², for example, greater than or equal to about 30 mg/cm², greater than or equal to about 32 mg/cm², greater than or equal to about 34 mg/cm², greater than or equal to about 34.3 mg/cm², or greater than or equal to about 34.35 mg/cm². In one or more embodiments, the loading level of the second positive electrode active material layer may be less than or equal to about 36 mg/cm², for example, less than or equal to about 35.5 mg/cm², less than or equal to about 35 mg/cm², or less than or equal to about 34.5 mg/cm². For a positive electrode satisfying or having the foregoing ranges, it may be suitable for the implementation of a rechargeable lithium battery having excellent or suitable safety, high capacity (e.g., electrical capacity), and high energy density.

In one or more embodiments, an average thickness of the first positive electrode active material layer may be greater than or equal to about 0.5 µm, for example, greater than or equal to about 0.8 µm, greater than or equal to about 1 µm, greater than or equal to about 1.5 µm, or greater than or equal to about 2 µm. In one or more embodiments, the average thickness of the first positive electrode active material layer may be less than or equal to about 10 µm, less than or equal to about 8 µm, less than or equal to about 7 µm, less than or equal to about 6 µm, or less than or equal to about 4 µm. It may be advantageous or beneficial for ensuring excellent or suitable battery safety and reducing energy loss.

For example, an average thickness of the second positive electrode active material layer may be greater than or equal to about 80 µm, for example, greater than or equal to about 90 µm, or greater than or equal to about 95 µm. In one or more embodiments, the average thickness of the second positive electrode active material layer may be less than or equal to about 200 µm, for example, less than or equal to about 180 µm, less than or equal to about 150 µm, or less than or equal to about 130 µm. In one or more embodiments, the high capacity (e.g., electrical capacity) characteristics of the rechargeable lithium battery may be effectively or suitably secured or provided.

For example, the average thickness of the second positive electrode active material layer may be about 4 times or more, for example, about 5 times or more, about 8 times or more, about 10 times or more, about 15 times or more, about 20 times or more, about 25 times or more, about 30 times or more, or about 40 times or more the average thickness of the first positive electrode active material layer. In one or more embodiments, the average thickness of the second positive electrode active material layer may be about 60 times or less, for example, about 55 times or less, about 50 times or less, or about 48 times or less the average thickness of the first positive electrode active material layer. In the foregoing ranges, the safety and high-capacity (e.g., electrical capacity) characteristics of the rechargeable lithium battery may be maximized or enhanced.

In one or more embodiments, the content (e.g., amount) of the first positive electrode active material layer may be greater than or equal to about 0.5 wt%, for example, greater than or equal to about 0.8 wt%, greater than or equal to about 1 wt%, greater than or equal to about 1.5 wt%, or greater than or equal to about 2 wt%, based on 100 wt% of the total amount of the positive electrode active material layer. In one or more embodiments, the content (e.g., amount) of the first positive electrode active material layer may be less than or equal to about 5 wt%, less than or equal to about 4.5 wt%, less than or equal to about 4 wt%, less than or equal to about 3.5 wt%, less than or equal to about 3 wt%, or less than or equal to about 2.8 wt%, based on 100 wt% of a total amount of the positive electrode active material layer. In one or more embodiments, the total amount of the positive electrode active material layer represents a total content (e.g., amount) of the first positive electrode active material layer and the second positive electrode active material layer. If (e.g., when) the foregoing ranges are satisfied, the effect of securing or providing excellent or suitable adhesion and safety for the positive electrode current collector may be maximized or enhanced.

For example, the content (e.g., amount) of the second positive electrode active material layer may be greater than or equal to about 95 wt%, for example, greater than or equal to about 95.5 wt%, greater than or equal to about 96 wt%, greater than or equal to about 96.5 wt%, greater than or equal to about 97 wt%, or greater than or equal to about 97.2 wt% based on 100 wt% of a total amount of the positive electrode active material layer. In one or more embodiments, the content (e.g., amount) of the second positive electrode active material layer may be less than or equal to about 99.5 wt%, for example, less than or equal to about 99.2 wt%, less than or equal to about 99 wt%, less than or equal to about 98.5 wt%, or less than or equal to about 98 wt% based on 100 wt% of a total amount of the positive electrode active material layer. If (e.g., when) the foregoing ranges are satisfied, the effects of securing or providing excellent or suitable safety and capacity (e.g., electrical capacity) may be maximized or enhanced.

In one or more embodiments, the first positive electrode active material layer and the second positive electrode active material layer may each further include a binder, a conductive (e.g., electrically conductive) material, and/or a (e.g., any suitable) combination thereof.

### Binder

The binder may improve or enhance binding properties of positive electrode active material particles with one another and/or with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive (e.g., electrically conductive) material (e.g., electron conductor) may be included to provide electrode conductivity, and any suitable electrically conductive material may be used as a conductive material unless it causes a chemical change in the constituted rechargeable lithium battery (e.g., unless it causes an undesirable chemical change to the rechargeable lithium battery). Examples of the conductive (e.g., electrically conductive) material may include a carbon-based material, such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a derivative thereof; and/or a (e.g., any suitable) mixture thereof.

A total content (e.g., amount) of the conductive (e.g., electrically conductive) material and the binder in the first positive electrode active material layer may be greater than or equal to about 10 wt%, for example, greater than or equal to about 11 wt%, greater than or equal to about 11.5 wt%, greater than or equal to about 12 wt%, or greater than or equal to about 13 wt% based on 100 wt% of the first positive electrode active material layer. In one or more embodiments, the total content (e.g., amount) of the conductive (e.g., electrically conductive) material and the binder in the first positive electrode active material layer may be less than or equal to about 15 wt%, for example, less than or equal to about 14.5 wt% or less than or equal to about 14 wt% based on 100 wt% of the first positive electrode active material layer. Within the foregoing ranges, it may be more advantageous or beneficial to secure or provide excellent or suitable bending safety.

For example, the total content (e.g., amount) of the conductive (e.g., electrically conductive) material and the binder in the second positive electrode active material layer may be greater than or equal to about 0.1 wt%, for example, greater than equal to about 0.5 wt%, greater than or equal to about 1.0 wt%, or greater than or equal to about 1.3 wt% based on 100 wt% of the second positive electrode active material layer. In one or more embodiments, the total content (e.g., amount) of the conductive (e.g., electrically conductive) material and the binder in the second positive electrode active material layer may be less than or equal to about 9 wt%, for example, less than or equal to about 7 wt%, less than or equal to about 5 wt%, or less than or equal to about 3 wt% based on 100 wt% of the second positive electrode active material layer. Within the foregoing ranges, it may be more advantageous or beneficial for securing safety and capacity (e.g., electrical capacity).

### Carbon Coating Layer

In one or more embodiments, a carbon coating layer may further be included or provided between the positive electrode current collector and the first positive electrode active material layer. The carbon coating layer according to one or more embodiments may include a carbon-based material, such as artificial graphite, natural graphite, carbon black, acetylene black, Ketjen black, denka black, and/or a (e.g., any suitable) combination thereof. If (e.g., when) such a carbon coating layer is included or provided, the internal resistance (e.g., electrical resistance) of the electrode (e.g., positive electrode) may be reduced (or a degree or occurrence of internal resistance (e.g., electrical resistance) of the electrode (e.g., positive electrode) may be reduced), and the capacity (e.g., electrical capacity) characteristics and safety of the rechargeable lithium battery may be further improved or enhanced.

For example, the carbon coating layer may further include a binder, and the binder may include a polymer including polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, epoxy resin, nylon, polyacrylamide, polyimide, polyacrylic acid, and/or a (e.g., any suitable) combination thereof. In one or more embodiments, the carbon coating layer may include a fluorine-based binder, such as polyvinylidene fluoride. If (e.g., when) the carbon coating layer according to one or more embodiments uses or include the binder as described in one or more embodiments, the carbon coating layer may secure or provide an appropriate or suitable level of adhesion.

For example, the average thickness of the carbon coating layer may be greater than or equal to about 0.5 µm, greater than or equal to about 1 µm, or greater than or equal to about 1.5 µm. In one or more embodiments, the average thickness of the carbon coating layer may be less than or equal to about 3 µm, less than or equal to about 2.5 µm, or less than or equal to about 2 µm. In the foregoing ranges, the effect of including a carbon coating layer may be maximized or enhanced.

For example, the carbon coating layer may be manufactured by preparing a carbon composition by mixing the carbon-based material as described in one or more embodiments and a binder in a solvent, and coating the carbon composition on a positive electrode current collector. In one or more embodiments, a mixing ratio of the carbon-based material and the binder may be in the range of about 60:40 to about 90:10 by weight. In the foregoing ranges, the excellent or suitable adhesion secured or provided by the binder and the excellent or suitable effects of reducing internal resistance (e.g., electrical resistance) and improving or enhancing cycle-life characteristics secured by the carbon-based material may be harmonized with or synergized by each other. In one or more embodiments, there is no particular limitation on the solvent, but, as an example, N-methylpyrrolidone may be used.

The positive electrode current collector may include Al, but embodiments of the present disclosure are not limited thereto.

### Rechargeable Lithium Battery

In one or more embodiments, a rechargeable lithium battery includes the positive electrode as described in one or more embodiments; a negative electrode; and an electrolyte. For example, a rechargeable lithium battery may include the positive electrode as described in one or more embodiments, a negative electrode, a separator between the positive electrode and the negative electrode, and an electrolyte solution.

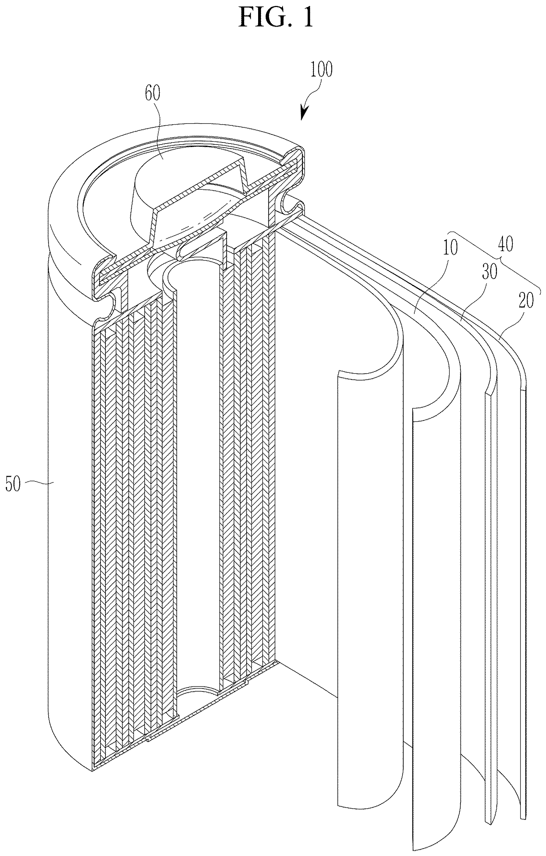

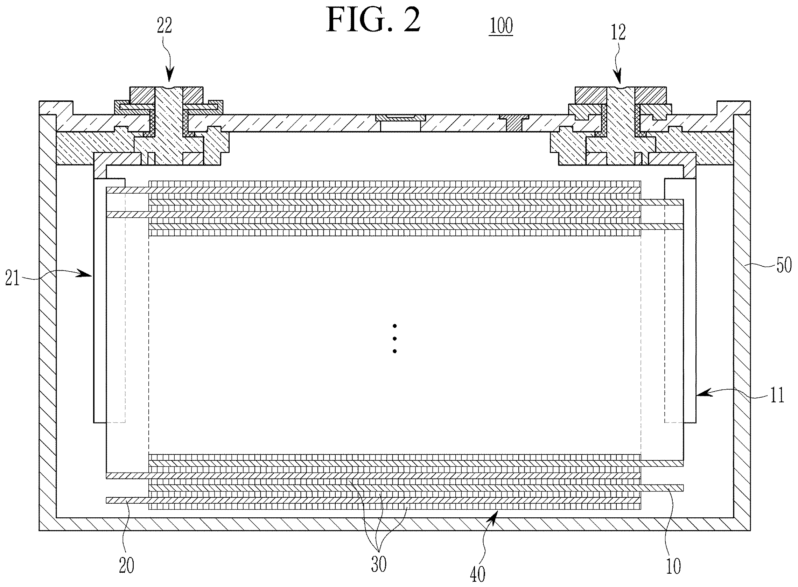

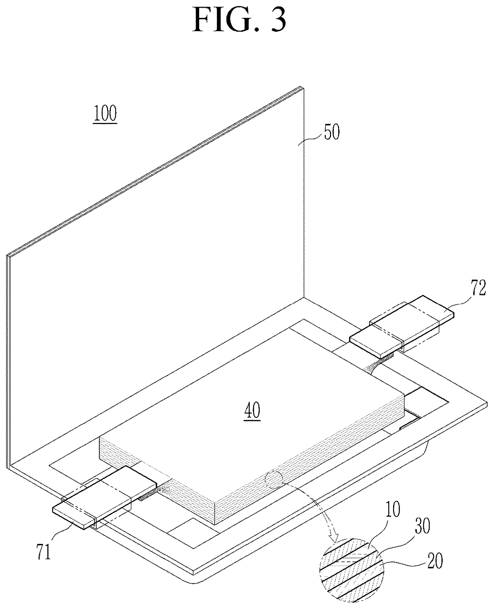

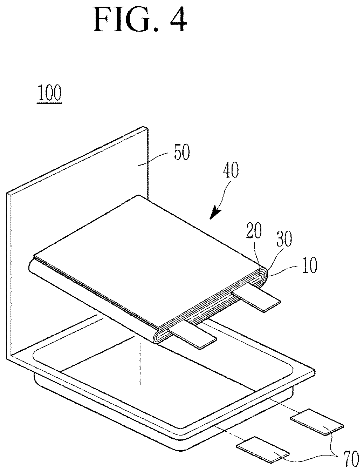

The rechargeable lithium battery may be classified into cylindrical, prismatic, pouch, coin, and/or the like. depending on the shape. FIGS. 1-4 each is a schematic diagram illustrating the rechargeable lithium battery according to one or more embodiments, where FIG. 1 is a cylindrical battery, FIG. 2 is a prismatic battery, and FIGS. 3 and 4 each is a pouch-shaped battery. Referring to FIGS. 1-4, the rechargeable lithium battery 100 may include an electrode assembly 40 having a separator 30 between the positive electrode 10 and the negative electrode 20, and a case 50 in which the electrode assembly 40 may be housed. The positive electrode 10, the negative electrode 20, and the separator 30 may be impregnated with an electrolyte solution. The rechargeable lithium battery 100 may include a sealing member 60 that seals the case 50 as shown in FIG. 1. In one or more embodiments, in FIG. 2, the rechargeable lithium battery 100 may include a positive electrode lead tab 11, a positive electrode terminal 12, a negative electrode lead tab 21, and/or a negative electrode terminal 22. As shown in FIGS. 3 and 4, the rechargeable lithium battery 100 may include an electrode tab 70, for example, a positive electrode tab 71 and a negative electrode tab 72 acting or serving as an electrical path for inducing the current formed or provided in the electrode assembly 40 to the outside.

A rechargeable lithium battery according to one or more embodiments may be rechargeable at high voltage or suitable for operation at high voltage. For example, the charging voltage of a rechargeable lithium battery may be greater than or equal to about 4.45 V, for example, about 4.45 V to about 4.7 V, about 4.45 V to about 4.6 V, or about 4.45 V to about 4.55 V, and/or the like. The rechargeable lithium battery according to one or more embodiments may implement high-capacity (e.g., electrical capacity) characteristics even if (e.g., when) charged at a high voltage by applying or providing a positive electrode active material according to one or more embodiments.

### Negative Electrode

The negative electrode may include a current collector and a negative electrode active material layer on the current collector, and the negative electrode active material layer may include a negative electrode active material and may further include a binder, a conductive (e.g., electrically conductive) material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous (e.g., non-crystalline) carbon, and/or a (e.g., any suitable) combination thereof as a carbon-based negative electrode active material. The crystalline carbon may be irregular (e.g., substantially irregular), and/or sheet (e.g., substantially sheet), flake (e.g., substantially flake), spherical (e.g., substantially spherical), and/or fiber (e.g., substantially fiber) shaped natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), Mg, Ca, Sr, Si, antimony (Sb), lead (Pb), indium (In), zinc (Zn), Ba, radium (Ra), germanium (Ge), aluminium (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (0<x≤2), a Si-Q alloy (wherein Q may be an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example, Mg, Ca, Sr, Ba, (Ra, scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), copper (Cu), silver (Ag), gold (Au), Zn, cadmium (Cd), B, Al, gallium (Ga), Sn, In, thallium (Tl), germanium (Ge), P, arsenic (As), Sb, bismuth (Bi), S, selenium Se), tellurium (Te), polonium (Po), and/or a (e.g., any suitable) combination thereof), and/or a (e.g., any suitable) combination thereof. The Sn-based negative electrode active material may be Sn, SnOₖ (0<k≤2) (e.g., SnO₂), a Sn alloy, and/or a (e.g., any suitable) combination thereof.

The silicon-carbon composite may be a composite of silicon and amorphous (e.g., non-crystalline) carbon. An average particle diameter (D₅₀) of the silicon-carbon composite particles may be, for example, about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and/or an amorphous (e.g., non-crystalline) carbon coating layer (shell) on the surface of the secondary particle. The amorphous (e.g., non-crystalline) carbon may also be between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and/or silicon particles and an amorphous (e.g., non-crystalline) carbon coating layer on the surface of the core. The crystalline carbon may be artificial graphite, natural graphite, and/or a (e.g., any suitable) combination thereof. The amorphous (e.g., non-crystalline) carbon may include soft carbon and/or hard carbon, a mesophase pitch carbonized product, and/or calcined coke.

If (e.g., when) the silicon-carbon composite includes silicon and amorphous (e.g., non-crystalline) carbon, a silicon content (e.g., amount) may be about 10 wt% to about 50 wt% and a content (e.g., amount) of amorphous (e.g., non-crystalline) carbon may be about 50 wt% to about 90 wt% based on 100 wt% of the silicon-carbon composite. In one or more embodiments, if (e.g., when) the composite includes silicon, amorphous (e.g., non-crystalline) carbon, and/or crystalline carbon, a silicon content (e.g., amount) may be about 10 wt% to about 50 wt%, a content (e.g., amount) of crystalline carbon may be about 10 wt% to about 70 wt%, and a content (e.g., amount) of amorphous (e.g., non-crystalline) carbon may be about 20 wt% to about 40 wt% based on 100 wt% of the silicon-carbon composite.

In one or more embodiments, a thickness of the amorphous (e.g., non-crystalline) carbon coating layer may be about 5 nm to about 100 nm. An average particle diameter (D₅₀) of the silicon particles (e.g., primary particles) may be about 10 nm to about 1 µm or about 10 nm to about 200 nm. The silicon particles may exist as silicon alone, in the form of a silicon alloy, and/or in an oxidized form. The oxidized form of silicon may be represented by SiOₓ (0<x≤2). In one or more embodiments, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) refers to a particle where a cumulative volume is about 50 volume% in a particle distribution.

The Si-based negative electrode active material and/or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio may be a weight ratio of about 1:99 to about 90:10.

### Binder

The binder may act or serve to well or suitably adhere the negative electrode active material particles to each other and/or to adhere the negative electrode active material to the current collector. The binder may be a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of imparting or increasing viscosity may be further included. As the cellulose-based compound, one or more selected from among carboxymethyl cellulose, hydroxypropyl methylcellulose, methyl cellulose, and alkali metal salts thereof may be mixed and used. The alkali metal may be Na, K, or lithium (Li).

The dry binder may be a polymer material capable of becoming or being processed to a fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material may be included to provide electrode conductivity, and any suitable electrically conductive material may be used as a conductive material unless it causes a chemical change (e.g., an undesirable chemical change in the rechargeable lithium battery). Examples of the conductive (e.g., electrically conductive) material may include a carbon-based material, such as natural graphite, artificial graphite, carbon black, acetylene black, ketjen black, a carbon fiber, a carbon nanofiber, a carbon nanotube, and/or the like; a metal-based material of a metal powder and/or a metal fiber including copper, nickel, aluminium, silver, and/or the like; a conductive (e.g., electrically conductive) polymer, such as polyphenylene and/or a derivative thereof; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive (e.g., electrically conductive) material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, a sheet, and/or a foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous (e.g., water-insoluble) organic solvent and/or a lithium salt.

The non-aqueous (e.g., water-insoluble) organic solvent may act or serve as a medium to transmit ions taking part in the electrochemical reaction of a rechargeable lithium battery. The non-aqueous (e.g., water-insoluble) organic solvent may be a carbonate-based, ester-based, ether-based, ketone-based, and/or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether group), and/or the like; amides, such as dimethylformamide; dioxolanes, such as 1,3-dioxolane, 1,4-dioxolane, and/or the like; sulfolanes, and/or the like.

The non-aqueous (e.g., water-insoluble) organic solvent may be used alone or in a (e.g., any suitable) mixture of two or more types or kinds, and if (e.g., when) two or more types or kinds are used in a mixture, a mixing ratio may be appropriately or suitably adjusted according to the desired or suitable battery performance, which may be generally available to those skilled in the field.

If (e.g., when) using a carbonate-based solvent, a cyclic carbonate and a chain (e.g., non-cyclic) carbonate may be mixed and used, and the cyclic carbonate and the chain (e.g., non-cyclic) carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, and/or an ethylene carbonate-based compound to improve or enhance battery (e.g., rechargeable lithium battery) cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply or provide lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte solution may have appropriate or suitable ionic conductivity and viscosity, and thus excellent or suitable performance may be achieved, and lithium ions may move effectively or suitably.

### Separator

Depending on the type or kind of the rechargeable lithium battery, a separator may be between the positive electrode and the negative electrode. The separator may include polyethylene, polypropylene, polyvinylidene fluoride, and/or a multilayer film of two or more layers thereof, and/or a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and/or a coating layer including an organic material, an inorganic material, and/or a (e.g., any suitable) combination thereof on one surface or both surfaces (e.g., two opposing surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., Teflon^{™}), and/or a copolymer and/or (e.g., any suitable) mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and/or a second structural unit including at least one selected from among a structural unit derived from (meth)acrylic acid and/or (meth)acrylate and/or a structural unit derived from (meth)acrylamido sulfonic acid and/or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, and/or a coating layer including an organic material and/or a coating layer including an inorganic material may be stacked.

The thickness of the coating layer may be about 0.5 µm to about 20 µm, for example, about 1 µm to about 10 µm or about 1 µm to about 5 µm.

Examples and Comparative Examples of the present disclosure are described in more detail. However, the following examples are only examples of the present disclosure, and embodiments of the present disclosure are not limited to the following examples.

### Example 1

### 1. Manufacturing of Positive Electrode

80 wt% of denka black and 20 wt% of polyvinylidene fluoride were dispersed in an N-methylpyrrolidone solvent to prepare a slurry to form a carbon coating layer. The slurry to form a carbon coating layer was coated on an aluminium film current collector and then, dried and compressed to form a carbon coating layer on the positive electrode current collector. Herein, the carbon coating layer had a loading level of 0.5 g/m².

On the carbon coating layer, a first positive electrode active material layer was formed or provided by mixing 87 wt% of LiFePO₄ having an average particle diameter (D₅₀) of 1 µm, 5 wt% of a carbon nanotube conductive material, and 8 wt% of a polyvinylidene fluoride binder to prepare a slurry in order to form a first positive electrode active material layer, coating the slurry, and then, drying and compressing it. Herein, the first positive electrode active material layer had a loading level of 0.80 mg/cm² and an average thickness of 2 µm.

Subsequently, a second positive electrode active material layer was formed or provided by mixing 98.7 wt% of LiCoO₂ having an average particle diameter (D₅₀) of 17 µm, 0.3 wt% of a carbon nanotube conductive material, and 1 wt% of a polyvinylidene fluoride binder to prepare a slurry in order to form a second positive electrode active material layer, coating the slurry on the first positive electrode active material layer, and then, drying and compressing it. Herein, the second positive electrode active material layer had a loading level of 34.30 mg/cm² and an average thickness of 95.5 µm.

Herein, based on 100 wt% of a total amount of a positive electrode active material layer, a content (e.g., amount) of the first positive electrode active material layer was 2.3 wt%, and a content (e.g., amount) of the second positive electrode active material layer was 97.7 wt%.

In one or more embodiments, based on 100 wt% of the total amount of the positive electrode active material layer, the content (e.g., amount) of the first positive electrode active material was 2.0 wt%, and the content (e.g., amount) of the second positive electrode active material was 96.5 wt%. Accordingly, a weight ratio of the second positive electrode active material to the first positive electrode active material was 48.3.

In view of the above, to manufacture the positive electrode, a carbon coating layer was formed or provided on an aluminium film current collector using a slurry composed of 80 wt% denka black and 20 wt% polyvinylidene fluoride in an N-methylpyrrolidone solvent, achieving a loading level of 0.5 g/m². On this carbon layer, a first positive electrode active material layer was created using a slurry of 87 wt% LiFePO₄, 5 wt% carbon nanotube, and 8 wt% polyvinylidene fluoride, resulting in a layer with a loading level of 0.80 mg/cm² and a thickness of 2 µm. Subsequently, a second positive electrode active material layer was formed using a slurry of 98.7 wt% LiCoO₂, 0.3 wt% carbon nanotube, and 1 wt% polyvinylidene fluoride, achieving a loading level of 34.30 mg/cm² and a thickness of 95.5 µm. The first positive electrode active layer constituted 2.3 wt% and the second positive electrode active layer 97.7 wt% of the total positive electrode active material layer, resulting in a weight ratio of 48.3 for the second positive electrode active material to the first positive electrode active material.

A negative electrode active material slurry was prepared by mixing 97.5 wt% of graphite negative electrode active material, 1.5 wt% of carboxymethyl cellulose, and 1 wt% of a styrene butadiene rubber in a water solvent. The negative electrode active material slurry was coated on a copper foil current collector, dried, and pressed, manufacturing a negative electrode.

The positive electrode and the negative electrode were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a generally available method.

### Example 2

A positive electrode and a rechargeable lithium battery cell were manufactured in substantially the same manner as in Example 1 except that the weight ratio of the second positive electrode active material to the first positive electrode active material was changed to 40 by satisfying Tables 1 to 3 in preparing the positive electrode active material layer.

### Example 3

A positive electrode and a rechargeable lithium battery cell were manufactured in substantially the same manner as in Example 1 except that the weight ratio of the second positive electrode active material to the first positive electrode active material was changed to 53.7 by satisfying Tables 1 to 3 in preparing the positive electrode active material layer.

### Comparative Example 1

A positive electrode and a rechargeable lithium battery cell were manufactured in substantially the same manner as in Example 1 except that the weight ratio of the second positive electrode active material to the first positive electrode active material was changed to 38.4 by satisfying Tables 1 to 3 in preparing the positive electrode active material layer.

### Comparative Example 2

A positive electrode and a rechargeable lithium battery cell were manufactured in substantially the same manner as in Example 1 except that the weight ratio of the second positive electrode active material to the first positive electrode active material was changed to 56.9 by satisfying Tables 1 to 3 in preparing the positive electrode active material layer.

In order to help understanding, further design details of Examples and Comparative Examples are briefly presented in Tables 1 to 3.

In the positive electrodes of Examples 1 to 3 and Comparative Examples 1 and 2, a loading level and a content (e.g., amount) of each positive electrode active material layer are shown in Table 1. In one or more embodiments, in the positive electrodes of Examples 1 to 3 and Comparative Examples 1 and 2, each component content (e.g., amount) of the first positive electrode active material layer and the second positive electrode active material layer is shown in Table 2, and each weight ratio of the second positive electrode active material to the first positive electrode active material is summarized in Table 3.

**Table 1**

| | Positive electrode active material layer | Loading level (mg/cm²) | Content (e.g., amount) of each positive electrode active material layer based on the total positive electrode active material layer (wt%) |
|---|---|---|---|
| Example 1 | First positive electrode active material layer | 0.80 | 2.3 |
| | Second positive electrode active material layer | 34.30 | 97.7 |
| | Total | 35.10 | 100 |
| Example 2 | First positive electrode active material layer | 0.97 | 2.8 |
| | Second positive electrode active material layer | 34.13 | 97.2 |
| | Total | 35.10 | 100 |
| Example 3 | First positive electrode active material layer | 0.71 | 2.0 |
| | Second positive electrode active material layer | 34.39 | 98.0 |
| | Total | 35.10 | 100 |
| Comparative Example 1 | First positive electrode active material layer | 1.00 | 2.8 |
| | Second positive electrode active material layer | 34.10 | 97.2 |
| | Total | 35.10 | 100 |
| Comparative Example 2 | First positive electrode active material layer | 0.70 | 2.0 |
| | Second positive electrode active material layer | 34.40 | 98.0 |
| | Total | 35.10 | 100 |

**Table 2**

| | Types or kinds of components in the positive electrode active material layer | Content (e.g., amount) of each component in the first positive electrode active material layer (wt%) | Content (e.g., amount) of each component in the second positive electrode active material layer (wt%) |
|---|---|---|---|
| Example 1 | Positive electrode active material | 87.0 | 98.7 |
| | Total content (e.g., amount) of conductive material and binder | 13.0 | 1.3 |
| Example 2 | Positive electrode active material | 87.0 | 98.7 |
| | Total content (e.g., amount) of conductive material and binder | 13.0 | 1.3 |
| Example 3 | Positive electrode active material | 87.0 | 98.7 |
| | Total content (e.g., amount) of conductive material and binder | 13.0 | 1.3 |
| Comparative Example 1 | Positive electrode active material | 87.0 | 98.7 |
| | Total content (e.g., amount) of conductive material and binder | 13.0 | 1.3 |
| Comparative Example 2 | Positive electrode active material | 87.0 | 98.7 |
| | Total content (e.g., amount) of conductive material and binder | 13.0 | 1.3 |

**Table 3**

| | | Content (e.g., amount) of each positive electrode active material based on 100 wt% of the total positive electrode active material layer (wt%) | Weight ratio of the second positive electrode active material to the first positive electrode active material |
|---|---|---|---|
| Example 1 | First positive electrode active material | 2.0 | 48.3 |
| | Second positive electrode active material | 96.5 | |
| | Total (sum of the first positive electrode active material and the second positive electrode active material) | 98.5 | |
| Example 2 | First positive electrode active material | 2.4 | 40 |
| | Second positive electrode active material | 96.0 | |
| | Total (sum of the first positive electrode active material and the second positive electrode active material) | 98.4 | |
| Example 3 | First positive electrode active material | 1.8 | 53.7 |
| | Second positive electrode active material | 96.7 | |
| | Total (sum of the first positive electrode active material and the second positive electrode active material) | 98.5 | |
| Comparative Example 1 | First positive electrode active material | 2.5 | 38.4 |
| | Second positive electrode active material | 95.9 | |
| | Total (sum of the first positive electrode active material and the second positive electrode active material) | 98.4 | |
| Comparative Example 2 | First positive electrode active material | 1.7 | 56.9 |
| | Second positive electrode active material | 96.7 | |
| | Total (sum of the first positive electrode active material and the second positive electrode active material) | 98.5 | |

### Evaluation Example 1: Safety Evaluation

The rechargeable lithium battery cells of Examples 1 to 3 and Comparative Examples 1 and 2 were subjected to a cell bending experiment in a fully charged state to evaluate harsh safety by measuring an exothermic maximum temperature and checking whether or not the cells were ignited, and the results are shown in Table 4. Herein, the cell bending experiment was conducted by charging the rechargeable lithium battery cells to 4.47 V at 0.5 C, putting a pause for about 24 hours, and bending central portions of the cells to 90°.

### Evaluation Example 2: Initial Charge and Discharge Evaluation

The rechargeable lithium battery cells of Examples 1 to 3 and Comparative Examples 1 and 2 were charged to an upper limit voltage of 4.47 V at a constant current of 0.2 C and to 0.02 C at the constant voltage and then, discharged to a cut-off voltage of 3.0 V at 0.2 C at 25 °C to proceed with initial charge and discharge. Table 4 shows initial discharge capacity (mAh/g) per g.

**Table 4**

| | Exotherm ic maximum temperature (°C) | Whether or not to ignite | Initial discharge capacity per gram (mAh/g) |
|---|---|---|---|
| Example 1 | 50 | OK | 182.4 |
| Example 2 | 48 | OK | 182.0 |
| Example 3 | 53 | OK | 183.0 |
| Comparative Example 1 | 44 | OK | 181.4 |
| Comparative Example 2 | 56 | 1/30 Fail | 183.4 |

Referring to the results of Table 4, Comparative Example 1 exhibited relatively low initial discharge capacity and slightly low capacity characteristics, and Comparative Example 2 exhibited ignition in the safety evaluation, which confirmed inferior safety.

In contrast, Examples 1 to 3 exhibited no ignition in the safety evaluation and thus excellent or suitable safety and also, initial discharge capacity of greater than or equal to 182 mAh/g and thus excellent or suitable capacity characteristics.

A battery manufacturing device, a battery management system (BMS) device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.
While the subject matter of the present disclosure has been described in connection with what is presently considered to be practical example embodiments, it is to be understood that present disclosure is not limited to the disclosed embodiments. In one or more embodiments, it is intended to cover one or more suitable modifications and equivalent arrangements included within the scope of the appended claims and equivalents thereof. It therefore will be understood that one or more embodiments described above are just illustrative but not limitative in all aspects.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |
| 201: | first positive electrode active material | | |
| 202: | second positive electrode active material | | |
| 300: | positive electrode current collector | | |
| 301: | first positive electrode active material layer | | |
| 302: | second positive electrode active material layer | | |

## Claims

1. A positive electrode, comprising:
a positive electrode current collector;
a first positive electrode active material layer provided on the positive electrode current collector and comprising a first positive electrode active material; and
a second positive electrode active material layer provided on the first positive electrode active material layer and comprising a second positive electrode active material,
wherein,
the first positive electrode active material comprises a lithium iron phosphate-based compound,
the second positive electrode active material comprises a lithium cobalt-based oxide, and
a weight ratio of the second positive electrode active material to the first positive electrode active material is about 40 to about 55.

2. The positive electrode as claimed in claim 1, wherein:
an average particle diameter of the first positive electrode active material is smaller than an average particle diameter of the second positive electrode active material.

3. The positive electrode as claimed in claim 1 or claim 2, wherein:
an average particle diameter of the second positive electrode active material is about 4 times to about 50 times an average particle diameter of the first positive electrode active material.

4. The positive electrode as claimed in any one of claims 1 to 3, wherein:
(i) an average particle diameter of the first positive electrode active material is about 0.1 µm to about 5 µm; and/or
(ii) an average particle diameter of the second positive electrode active material is about 8 µm to about 30 µm.

5. The positive electrode as claimed in any one of claims 1 to 4, wherein:
(i) the first positive electrode active material is in an amount of about 85 wt% to about 90 wt% based on 100 wt% of the first positive electrode active material layer; and/or
(ii) the second positive electrode active material is in an amount of about 91 wt% to about 99.9 wt% based on 100 wt% of the second positive electrode active material layer.

6. The positive electrode as claimed in any one of claims 1 to 5, wherein:
(i) an average thickness of the first positive electrode active material layer is about 0.5 µm to about 10 µm; and/or
(ii) an average thickness of the second positive electrode active material layer is about 80 µm to about 200 µm.

7. The positive electrode as claimed in any one of claims 1 to 6, wherein:
an average thickness of the second positive electrode active material layer is about 4 times to about 60 times an average thickness of the first positive electrode active material layer.

8. The positive electrode as claimed in any one of claims 1 to 7, wherein:
the lithium iron phosphate-based compound is represented by Chemical Formula 1:
Chemical Formula 1 Liₐ₁Feₓ₁M¹_{y1}M²_{z1}(PO_{4-b1})X_{b1},
and
wherein, in Chemical Formula 1, 0.9≤a1≤1.8, 0.1≤x1≤1, 0≤y1≤0.7, 0≤z1≤0.7, 0.9≤x1+y1+z1≤1.1, and 0≤b1≤0.1, M¹ and M² are each independently Al, B, Ba, Ca, Ce, Co, Cr, Mg, Mn, Mo, Nb, Si, Sr, Ti, V, W, Zr, or a combination thereof, and X is F, P, S or a combination thereof.

9. The positive electrode as claimed in any one of claims 1 to 8, wherein:
the lithium cobalt-based oxide is represented by Chemical Formula 2:
Chemical Formula 2 Liₐ₂Coₓ₂M³_{y2}M⁴_{z2}O_{2-b2}X_{b2},
and
wherein, in Chemical Formula 2, 0.9≤a2≤1.8, 0.3≤x2≤1, 0≤y2≤0.7, 0≤z2≤0.7, 0.9≤x2+y2+z2≤1.1, and 0≤b2≤0.1, M³ and M⁴ are each independently Al, B, Ba, Ca, Ce, Cr, Fe, Mg, Mn, Mo, Nb, Si, Sr, Ti, V, W, Zr, or a combination thereof, and X is F, P, S or a combination thereof.

10. The positive electrode as claimed in any one of claims 1 to 9, wherein:
the lithium cobalt-based oxide has a cobalt content of greater than or equal to about 60 mol% based on 100 mol% of a total metal excluding lithium.

11. The positive electrode as claimed in any one of claims 1 to 10, wherein:
(i) a content of the first positive electrode active material layer is about 0.5 wt% to about 5 wt% based on 100 wt% of a total amount of the first positive electrode active material layer and the second positive electrode active material layer; and/or
(ii) a content of the second positive electrode active material layer is about 95 wt% to about 99.5 wt% based on 100 wt% of a total amount of the first positive electrode active material layer and the second positive electrode active material layer.

12. The positive electrode as claimed in any one of claims 1 to 11, wherein:
(i) a total content of a conductive material and a binder in the first positive electrode active material layer is about 10 wt% to about 15 wt% based on 100 wt% of the first positive electrode active material layer; and/or
(ii) a total content of a conductive material and a binder in the second positive electrode active material layer is about 0.1 wt% to about 9 wt% based on 100 wt% of the second positive electrode active material layer.

13. The positive electrode as claimed in any one of claims 1 to 12, wherein:
a carbon coating layer is further included between the positive electrode current collector and the first positive electrode active material layer.

14. The positive electrode as claimed in any one of claims 1 to 13, wherein:
(i) a loading level of the first positive electrode active material layer is about 0.1 mg/cm² to about 4 mg/cm²; and/or
(ii) a loading level of the second positive electrode active material layer is about 29.9 mg/cm² to about 36 mg/cm².

15. A rechargeable lithium battery, comprising:
the positive electrode as claimed in any one of claims 1 to 14;
a negative electrode; and
an electrolyte.
